# FASCICULE DE BREVET EUROPEEN

(11) **EP 0 751 021 B1**
(45) Date de publication et mention de la délivrance du brevet: **24.11.1999**
(21) Numéro de dépôt: 96401407.0
(22) Date de dépôt: 25.06.1996
(51) Int. Cl.: B60H 1/00

(54) **Dispositif de chauffage et/ou climatisation, notamment pour véhicule automobile**
Heizungs- und/oder Klimaanlage für ein Kraftfahrzeug
Heating and/or air conditioning system for motor vehicle

(30) Priorité: 29.06.1995 FR 9507864
(43) Date de publication de la demande: 02.01.1997
(73) Titulaire: VALEO CLIMATISATION, 78321 La Verrière (FR)
(72) Inventeur: Elliot, Gilles, 91080 Courcouronnes (FR)
(74) Mandataire: Gamonal, Didier

(56) Documents cités:
- EP-A- 0 212 306
- FR-A- 1 210 949
- US-A- 4 899 809

## Description

L'invention concerne un dispositif de chauffage et/ou climatisation, notamment pour véhicule automobile, et plus spécifiquement les véhicules de faible volume habitable.

Cette invention concerne plus particulièrement les dispositifs de chauffage et/ou climatisation comprenant une chambre d'admission d'air froid ou recirculé et une chambre de chauffage logeant un échangeur de chaleur la divisant en un premier compartiment, communiquant avec la chambre d'admission par une première sortie de celle-ci, et un second compartiment.

Généralement, le premier compartiment comprend un volet de distribution pour répartir l'air entre l'échangeur de chaleur, et un conduit d'air froid. Ce conduit d'air froid présente une sortie qui débouche dans une partie aménagée du second compartiment afin que l'air froid qu'elle canalise soit éventuellement mélangé à l'air chaud issu de l'échangeur de chaleur.

Un tel dispositif (voir EP-A-0 212 306) présente un degré de complexité relativement important, ce qui en augmente les coûts de fabrication.

De plus, la multiplication des conduits de distribution et des volets associés, et l'emplacement du pulseur et/ou de l'évaporateur en amont du premier compartiment, augmentent notablement, respectivement, le volume qu'ils occupent et leur encombrement longitudinal et/ou vertical.

De tels dispositifs ne peuvent être installés dans certains véhicules équipés d'un pare-brise très plongeant, d'un compartiment moteur de faible volume et d'un volume habitable réduit, ce qui est le cas notamment des petits monospaces, qu'au détriment de certaines options et/ou du développement d'une nouvelle architecture du compartiment moteur.

En conséquence, un but de l'invention est de procurer un dispositif de chauffage et/ou climatisation qui ne présente pas les inconvénients des dispositifs de la technique antérieure, et notamment au niveau de la complexité et de l'encombrement vertical et/ou longitudinal.

L'invention propose à cet effet un dispositif du type décrit dans la revendication 1.

Ainsi, on utilise l'échangeur de chaleur dans le sens habituel amont-aval, mais également dans le sens aval-amont, ce qui permet de réduire le nombre de conduits et de volets.

Ci-dessus, le sens amont-aval est celui qui est traditionnellement utilisé, et dans lequel le premier compartiment est positionné en amont de l'échangeur de chaleur, et le second compartiment en aval de celui-ci.

Selon une autre caractéristique de l'invention, le second compartiment comprend une sortie communiquant avec un troisième conduit dont l'accès est contrôlé par le troisième volet et destiné à alimenter en air au moins de secondes buses de distribution logées dans l'habitacle du véhicule.

Le troisième volet contrôle ainsi, en même temps, deux conduits, dont un en coopération avec le premier volet, ce qui permet de réduire encore le nombre de ces volets.

Dans une forme de réalisation préférentielle, les premières buses sont des buses d'aération pieds, les secondes buses sont des buses d'aération centrales et latérales, et les troisièmes buses sont des buses de dégivrage, les buses d'aération pieds étant situées en aval des premier et troisième volets.

Très avantageusement, le dispositif proposé autorise au moins cinq modes de distribution choisis parmi :
- un premier mode dans lequel le premier volet interdit l'accès aux buses d'aération pieds, le troisième volet interdit l'accès au troisième conduit, et le second volet est au moins partiellement ouvert, ce qui permet d'alimenter les buses d'aération latérales et centrales avec un mélange d'air chaud et d'air froid ou recirculé provenant de la chambre d'admission,
- un second mode dans lequel le premier volet interdit, à l'air issu de la chambre d'admission, l'accès au premier conduit, le second volet est au moins partiellement ouvert, et le troisième volet interdit l'accès au troisième conduit, ce qui permet d'alimenter les buses d'aération pieds avec de l'air chaud et les buses d'aération latérales et centrales avec un mélange d'air ayant léché l'échangeur de chaleur et d'air froid ou recirculé provenant de la chambre d'admission,
- un troisième mode dans lequel le second volet interdit, à l'air issu de la chambre d'admission, l'accès au second conduit, le premier volet est au moins partiellement ouvert, et le troisième volet interdit l'accès au troisième conduit, ce qui permet d'alimenter les buses d'aération pieds avec un mélange d'air chaud et d'air froid issu de la chambre d'admission,
- un quatrième mode dans lequel les premier et second volets interdisent respectivement, à l'air issu de la chambre d'admission, l'accès aux premier et second conduits, et le troisième volet interdit l'accès au premier conduit, ce qui permet d'alimenter les buses de dégivrage avec de l'air chaud, et
- un cinquième mode dans lequel le second volet interdit, à l'air issu de la chambre d'admission, l'accès au second conduit, les premier et troisième volets autorisent des accès partiels aux premier et troisième conduits, ce qui permet d'alimenter les buses d'aération pieds avec un mélange d'air chaud et d'air froid issu de la chambre d'admission, et les buses de dégivrage avec de l'air chaud.

Un tel dispositif est donc propre à fonctionner, soit en mode dit "aération" dans lequel seules les buses d'aération centrales et latérales, ou bien les buses d'aération pieds, sont alimentées en air froid ou chaud ou mélangé, soit en mode dit "à deux niveaux" dans lequel on instaure un gradient de température entre les buses d'aération centrales et latérales et les buses d'aération pieds, soit en mode dit "dégivrage" dans lequel seules les buses de dégivrage sont alimentées en air chaud, soit en mode mixte dit "aération pieds-dégivrage" dans lequel les buses d'aération pieds et de dégivrages sont alimentées respectivement en air mixte ou chaud.

Dans un mode de réalisation préférentiel du dispositif selon l'invention, les chambres d'admission et de chauffage et au moins partiellement le premier conduit sont délimités par des parois d'un boîtier de distribution d'air.

Avantageusement la chambre de chauffage est logée sensiblement au dessus de la chambre de distribution, et le premier conduit est délimité par une paroi arrière du boîtier et une paroi intermédiaire verticale délimitant l'arrière des deux chambres, ainsi superposées, et comprenant la seconde sortie de la chambre d'admission.

La partie distribution et chauffage du dispositif proposé est ainsi réalisée en un seul boîtier de conception particulièrement simple, de par son architecture novatrice.

Par ailleurs, les éléments qui alimentent la chambre d'admission en air froid et/ou recirculé (le pulseur, le filtre et l'évaporateur) sont installés sensiblement parallèlement aux parois latérales de la chambre d'admission, la sortie de l'évaporateur étant sensiblement en regard de l'entrée de cette chambre d'admission.

Ainsi, on réduit très notablement l'encombrement vertical et l'encombrement longitudinal du dispositif proposé.

Dans la description qui suit, faite à titre d'exemple, on se réfère aux dessins annexés, sur lesquels :
- la figure 1 est un schéma illustrant une partie du dispositif de chauffage et/ou climatisation selon l'invention;
- la figure 2 est une coupe transversale du boîtier de distribution de la figure 1, selon le plan I-I, illustrant le mode dit "aération centrale et latérale";
- la figure 3 est une coupe transversale du boîtier de distribution de la figure 1, selon le plan I-I, illustrant le mode dit "aération à deux niveaux", et
- la figure 4 est une coupe transversale du boîtier de distribution de la figure 1, selon le plan I-I, illustrant le mode mixte dit "aération pieds-dégivrage".

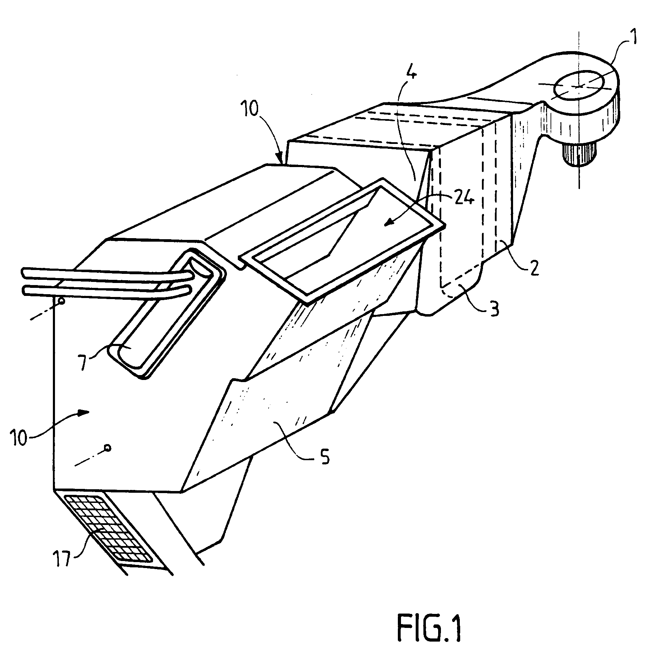

On se réfère tout d'abord à la figure 1 pour décrire le dispositif de chauffage et/ou climatisation proposé, dans un mode de réalisation préférentiel.

Le dispositif comprend de premiers éléments destinés à l'alimenter en air, et de seconds éléments destinés à distribuer cet air et/ou à le réchauffer.

Les premiers éléments comprennent un pulseur 1 qui reçoit de l'air recirculé et/ou extérieur et/ou de l'air issu de la boucle de climatisation, un filtre 2 pour filtrer l'air issu du pulseur 1, un évaporateur 3 sensiblement parallèle au filtre et destiné à refroidir, si besoin est, l'air filtré, et un conduit d'admission 4 destiné à alimenter les seconds éléments en air issu de l'évaporateur 3.

Les premiers éléments réalisent ainsi une structure d'alimentation d'air sensiblement linéaire. Dans l'exemple décrit, les premiers éléments sont installés parallèlement à l'axe transversal du véhicule, sous la planche de bord P.

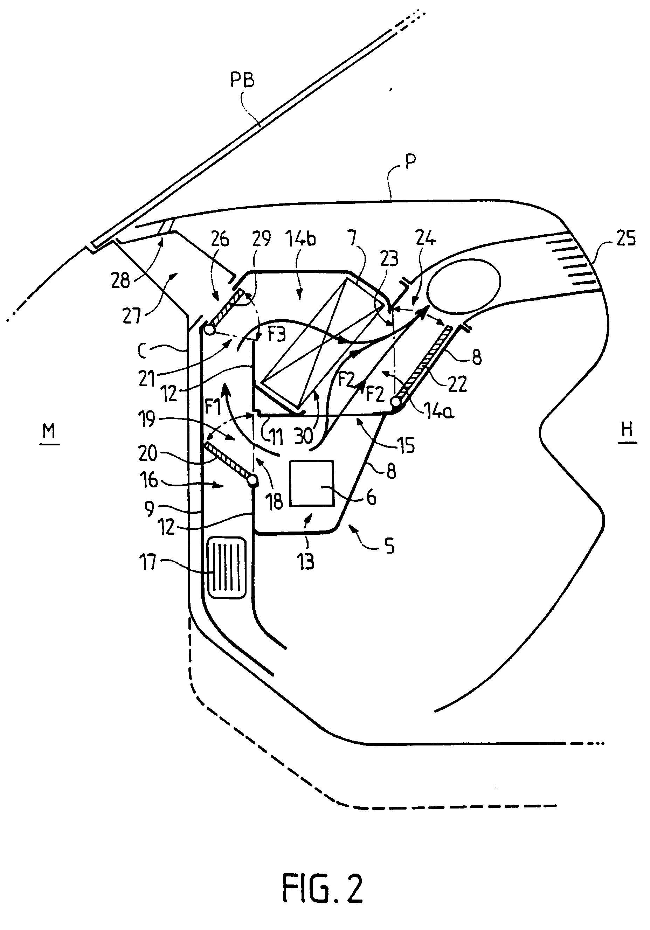

Les seconds éléments comprennent un boîtier de distribution d'air 5, connecté par son entrée 6 (voir figure 2) à la sortie du conduit d'admission 4, et un échangeur de chaleur 7 logé dans ce boîtier 5, destiné à chauffer une partie au moins de l'air issu des premiers éléments.

On se réfère maintenant à la figure 2 pour décrire l'architecture interne du boîtier 5 équipé de l'échangeur de chaleur 7.

Le boîtier 5 est logé dans la planche de bord P du véhicule et comprend des parois avant 8, arrière 9 sensiblement parallèle et en regard de la cloison de séparation C entre l'habitacle H et le compartiment moteur M, latérales 10, et intermédiaires horizontale 11 et verticale 12 qui délimitent, dans une partie inférieure, une chambre d'admission 13, dont l'entrée 6, qui est connectée au conduit d'admission 4, est réalisée dans une paroi latérale 10, et dans une partie supérieure, une chambre de chauffage 14 superposée à la chambre d'admission 13.

La chambre de chauffage 14 loge l'échangeur de chaleur 7 de façon oblique, de sorte que celui-ci la divise en un premier compartiment 14a et un second compartiment 14b, de volumes sensiblement équivalents.

La chambre d'admission 13 comprend une première sortie 15 réalisée dans la paroi intermédiaire horizontale 11, lui permettant de communiquer avec le premier compartiment 14a de la chambre de chauffage 14.

La paroi intermédiaire verticale 12 définit avec la paroi arrière 9 un premier conduit de circulation d'air 16 sensiblement vertical, qui se prolonge en dessous du fond de la chambre d'admission 13 pour alimenter en air des buses d'aération "pieds" 17 destinées à délivrer de l'air au niveau des pieds des passagers avant et arrière installés dans l'habitacle H du véhicule.

La chambre d'admission 13 comprend également une seconde sortie 18 réalisée dans la paroi intermédiaire 12 et destinée à alimenter en air froid ou recirculé une partie intermédiaire 19 du premier conduit 16.

L'accès à la partie intermédiaire 19 du premier conduit 16 est contrôlé par un premier volet de distribution 20 piloté par des moyens de commande de confort (non représentés).

La partie terminale 21 du premier conduit 16, située à l'opposée des buses d'aération pieds 17, débouche dans le second compartiment 14b.

La paroi avant 8 du boîtier 5 comprend au niveau du premier compartiment 14a, en amont de l'échangeur de chaleur 7, une ouverture formant sortie d'air communiquant avec un second conduit 24 destiné à alimenter en air des buses d'aération 25 logées dans la planche de bord P du véhicule en positions centrales et latérales.

L'accès au second conduit 24 est contrôlé par un second volet 22 également piloté par les moyens de commande de confort.

Enfin, la paroi arrière 9 du boîtier 5 comprend, au niveau du second compartiment 14b et juste après la partie terminale 21 du premier conduit 16, une ouverture formant sortie 26 du second compartiment. Cette sortie 26 communique avec un troisième conduit 27 destiné à alimenter en air des buses de dégivrage 28 logées dans la planche de bord du véhicule à proximité du pare-brise PB.

L'accès à la partie terminale 21 du premier conduit et au troisième conduit 27 est contrôlé par un unique troisième volet 29 également piloté par les moyens de commande de confort.

On se réfère maintenant aux figures 2 à 4 pour décrire les cinq principaux modes de fonctionnement du dispositif proposé.

Dans un premier mode dit "aération centrale et latérale", illustré figure 2 (positions des trois volets schématisées en trait plein), le premier volet (20) interdit l'accès aux buses d'aération pieds (17), le troisième volet (29) interdit l'accès au troisième conduit (27), et le second volet (22) est au moins partiellement ouvert.

Une première partie de l'air qui arrive dans la chambre d'admission 13 pénètre dans le premier conduit 16 (flèche F1) grâce à l'effet conjugué du pulseur 1 et d'un phénomène de dépression, tandis que la seconde partie d'air arrivée dans cette chambre pénètre dans le premier compartiment 14a (flèche F2) grâce au même effet conjugué.

La première partie d'air débouche alors dans le second compartiment 14b, puis traverse l'échangeur de chaleur 7 en se réchauffant, et débouche dans le premier compartiment 14a (flèche F3). Ce trajet d'air définit un premier sens de circulation S1.

La seconde partie d'air voit sa température légèrement augmentée par léchage partiel de la face amont 30 de l'échangeur de chaleur 7. Cet air est ensuite mélangé à l'air qui vient de traverser l'échangeur de chaleur. Le mélange pénètre alors dans le second conduit 24, ce qui permet d'alimenter les buses d'aération latérales et centrales (25).

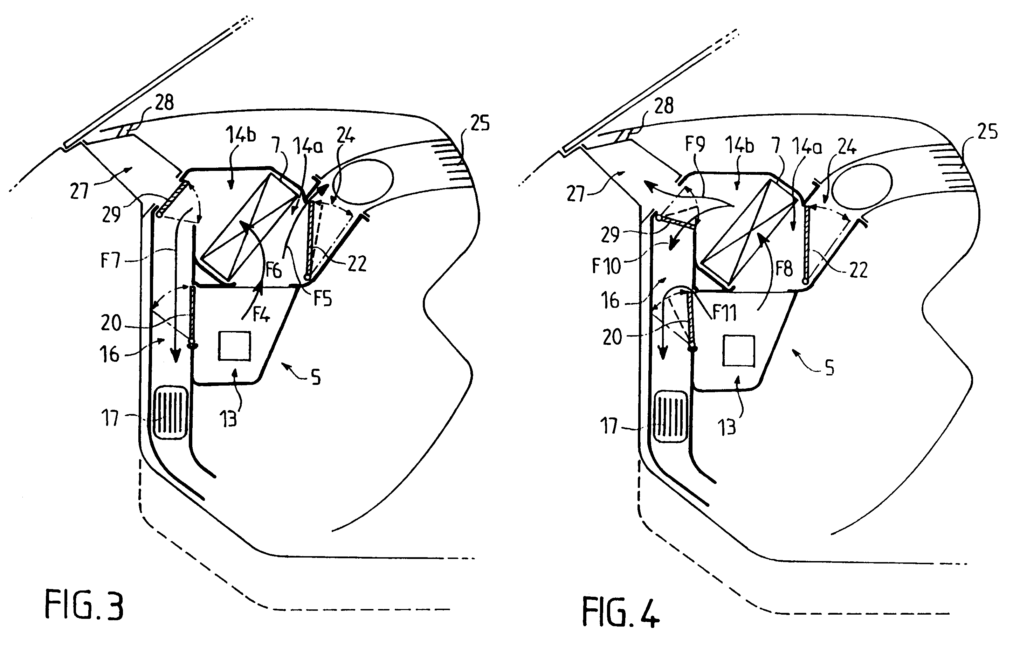

Dans un second mode dit "aération à deux niveaux", illustré figure 3 (les positions des premier 20 et troisième 29 volets sont schématisées en trait plein, tandis que celle du second volet 22 est schématisée en pointillés), le premier volet (20) interdit à l'air issu de la chambre d'admission (13) l'accès au premier conduit (16), le second volet (22) est au moins partiellement ouvert, et le troisième volet (29) interdit l'accès au troisième conduit (27).

La totalité de l'air qui arrive dans la chambre d'admission 13 pénètre dans le premier compartiment 14a (flèche F4) grâce à l'effet conjugué du pulseur 1 et d'un phénomène de dépression.

Une première partie d'air, qui a partiellement léché la face amont 30 de l'échangeur de chaleur 7, est alors aspirée par le second conduit 24 (flèche F5). Cela permet d'alimenter les buses d'aération centrales et latérales 25 avec un air dont la température est légèrement supérieure à celle de l'air issu de la chambre d'admission 13.

Une seconde partie d'air traverse l'échangeur de chaleur 7 en se réchauffant (flèche F6), puis débouche dans le second compartiment 14b. Cet air chaud pénètre alors par aspiration dans le premier conduit 16 (flèche F7), ce qui permet d'alimenter les buses d'aération pieds (17). Les flèches F4 et F6 définissent un second sens de circulation S2.

On instaure ainsi un système à deux niveaux de température, l'air le plus chaud étant adressé aux pieds des passagers, tandis que l'air le moins chaud est délivré au niveau des parties supérieures de la planche de bord P, ce qui permet d'améliorer le confort aérothermique des passagers.

Dans un troisième mode dit "aération pieds", illustré figure 3 (positions des trois volets schématisées en trait plein), le second volet (22) interdit, à l'air issu de la chambre d'admission (13), l'accès au second conduit (24), le premier volet (20) est au moins partiellement ouvert, et le troisième volet (29) interdit l'accès au troisième conduit (27).

La totalité de l'air issu de la chambre d'admission 13 traverse l'échangeur de chaleur 7 en se réchauffant, puis débouche dans le second compartiment 14b et pénètre par aspiration dans le second conduit (flèches F4, F6 et F7). Ce mode de fonctionnement est identique au second mode, hormis le fait que seules les buses d'aération pieds 17 sont alimentées en air chaud.

Dans un quatrième mode dit "dégivrage", illustré figure 4 (positions des trois volets schématisées en trait plein), les premier (20) et second (22) volets interdisent respectivement, à l'air issu de la chambre d'admission (13), l'accès aux premier (16) et second (24) conduits, et le troisième volet (29) interdit l'accès au premier conduit (16).

La totalité de l'air issu de la chambre d'admission 13 traverse l'échangeur de chaleur 7 en se réchauffant, puis débouche dans le second compartiment 14b et pénètre par aspiration dans le troisième conduit 27 (flèches F8 et F9). Cela permet d'alimenter les buses de dégivrage (28) avec de l'air chaud ayant suivi le second sens de circulation S2.

Dans un cinquième mode dit "dégivrage-aération pieds", illustré figure 4 (les positions des premier 20 et troisième 29 volets sont schématisées en pointillés, tandis que celle du second volet 22 est schématisée en trait plein), le second volet (22) interdit à l'air issu de la chambre d'admission (13) l'accès au second conduit (24), les premier (20) et troisième (29) volets sont partiellement ouverts autorisant ainsi des accès partiels aux premier (16) et troisième (27) conduits.

Une première partie de l'air qui arrive dans la chambre d'admission 13 pénètre dans le premier compartiment 14a, grâce à l'effet conjugué du pulseur 1 et d'un phénomène de dépression, puis traverse l'échangeur de chaleur 7 en se réchauffant (flèche F8), et débouche dans le second compartiment 14b.

Cette air chaud est alors réparti en deux sous-parties, par le troisième volet 29, destinées respectivement à alimenter le troisième conduit 27 (flèche F9) desservant les buses de dégivrage 28, et le premier conduit 16 au niveau de sa partie terminale 21 (flèche F10).

La seconde partie d'air arrivée dans la chambre d'admission 13, beaucoup plus petite que la première partie d'air, pénètre dans le premier conduit 16 (flèche F11) au niveau de sa partie intermédiaire 19, grâce au même effet conjugué que ci-dessus. Cet air est alors mélangé à la seconde sous-partie d'air chaud issue du second compartiment 14b, puis par aspiration, l'air ainsi mélangé est acheminé au niveau des buses d'aération pieds 17.

Bien entendu, d'autres modes de fonctionnement peuvent être envisagés dans le cadre des revendications ci-après, lesquels modes ne varieront des cinq modes décrits précédemment que par la combinaison des positions respectives des trois volets.

Par ailleurs, on a décrit un dispositif destiné à distribuer de l'air traité ou recirculé de façon non différenciée relativement aux parties latérales droite et gauche de l'habitacle. Mais, il est clair que le dispositif décrit peut être modifié afin d'autoriser une distribution différenciée droite-gauche. Une telle modification nécessiterait par exemple de diviser le boîtier en deux parties avec une cloison médiane verticale, et à mettre trois volets tels que ceux décrits, dans chacune des deux parties.

Enfin, les modes de fonctionnement décrits illustraient la fonction chauffage du dispositif, mais il est clair qu'il fonctionne également en mode climatisation. Dans cette hypothèse, se sont les modes dits "aération centrale et latérale" ou "aération pieds" qui sont utiles. L'échangeur de chaleur ne fonctionnant pas, on peut envisager un mode simplifié de fonctionnement, dans lequel le troisième volet interdit l'accès au premier conduit, les premier et second volets autorisant respectivement l'accès aux premier et second conduits.

## Revendications

1. Dispositif de chauffage et/ou climatisation, notamment pour véhicule automobile, du type comprenant une chambre d'admission d'air froid ou recirculé (13) et une chambre de chauffage (14) logeant un échangeur de chaleur (7) la divisant en un premier compartiment (14a), communiquant avec la chambre d'admission par une première sortie (15) de celle-ci, et un second compartiment (14b), caractérisé en ce que la chambre d'admission (13) comporte une seconde sortie (18) débouchant dans une partie intermédiaire (19) d'un premier conduit (16) à accès contrôlé par un premier volet (20) et destiné à alimenter en air au moins de premières buses de distribution (17) logées dans l'habitacle (H) du véhicule,
en ce que le premier compartiment (16) comprend en amont de l'échangeur de chaleur (7) une sortie (23) communiquant avec un second conduit (24) à accès contrôlé par un second volet (22) et destiné à alimenter en air au moins de secondes buses de distribution (25) logées dans l'habitacle (H) du véhicule, et
en ce que le second compartiment (14b) comporte une ouverture communiquant, de façon contrôlée par un troisième volet (29), avec une partie terminale (21) du premier conduit (16), de sorte qu'en fonction des positionnements respectifs des volets (20,22,29), l'air issu de la chambre d'admission (13) puisse circuler, soit du premier compartiment (14a) vers le premier conduit (16) pour alimenter en air chaud les premières buses (17) après traversée de l'échangeur (7) et passage par le troisième volet (29), soit du premier conduit (16) vers le second conduit (24) pour alimenter en air chaud les secondes buses (25) après passage par les premier (20) et troisième (29) volets, traversée de l'échangeur de chaleur (7), et passage par le second volet (22).

2. Dispositif selon la revendication 1, caractérisé en ce que le second compartiment (14b) comprend une sortie communiquant avec un troisième conduit (27) dont l'accès est contrôlé par le troisième volet (29) et destiné à alimenter en air au moins de secondes buses de distribution (25) logées dans l'habitacle (H) du véhicule.

3. Dispositif selon la revendication 2, caractérisé en ce que les premières buses (17) sont des buses d'aération pieds, en ce que les secondes buses (25) sont des buses d'aération centrales et latérales, et en ce que les troisièmes buses (28) sont des buses de dégivrage.

4. Dispositif selon la revendication 3, caractérisé en ce que les buses d'aération pieds (17) sont situées en aval des premier (20) et troisième (29) volets.

5. Dispositif selon l'une des revendications 3 et 4, caractérisé en ce qu'il autorise au moins cinq modes de distribution choisis parmi :
- un premier mode dans lequel le premier volet (20) interdit l'accès aux buses d'aération pieds (17), le troisième volet (29) interdit l'accès au troisième conduit (27), et le second volet (22) est au moins partiellement ouvert, ce qui permet d'alimenter les buses d'aération latérales et centrales (25) avec un mélange d'air chaud et d'air froid ou recirculé provenant de la chambre d'admission (13),
- un second mode dans lequel le premier volet (20) interdit, à l'air issu de la chambre d'admission (13), l'accès au premier conduit (16), le second volet (22) est au moins partiellement ouvert, et le troisième volet (29) interdit l'accès au troisième conduit (27), ce qui permet d'alimenter les buses d'aération pieds (17) avec de l'air chaud et les buses d'aération latérales et centrales (25) avec un mélange d'air ayant léché l'échangeur de chaleur (7) et d'air issu de la chambre d'admission (13),
- un troisième mode dans lequel le second volet (22) interdit, à l'air issu de la chambre d'admission (13), l'accès au second conduit (24), le premier volet (20) est au moins partiellement ouvert, et le troisième volet (29) interdit l'accès au troisième conduit (27), ce qui permet d'alimenter les buses d'aération pieds (17) avec un mélange d'air chaud et d'air froid issu de la chambre d'admission,
- un quatrième mode dans lequel les premier (20) et second (22) volets interdisent respectivement, à l'air issu de la chambre d'admission (13), l'accès aux premier (16) et second (24) conduits, et le troisième volet (29) interdit l'accès au premier conduit (16), ce qui permet d'alimenter les buses de dégivrage (28) avec de l'air chaud, et
- un cinquième mode dans lequel le second volet (22) interdit, à l'air issu de la chambre d'admission (13), l'accès au second conduit (24), les premier (20) et troisième (29) volets autorisent des accès partiels aux premier (16) et troisième (27) conduits, ce qui permet d'alimenter les buses d'aération pieds (17) avec un mélange d'air chaud et d'air froid issu de la chambre d'admission (13), et les buses de dégivrage (28) avec de l'air chaud.

6. Dispositif selon l'une des revendications 1 à 5, caractérisé en ce que les chambres d'admission (13) et de chauffage (14) et au moins partiellement le premier conduit (16) sont délimités par des parois (8-12) d'un boîtier de distribution d'air (5).

7. Dispositif selon la revendication 6, caractérisé en ce que la chambre de chauffage (13) est logée sensiblement au dessus de la chambre de distribution (14), et en ce que le premier conduit est délimité par une paroi arrière (9) du boîtier (5) et une paroi intermédiaire verticale (12) délimitant l'arrière des deux chambres (13,14) ainsi superposées et comprenant la seconde sortie (18) de la chambre d'admission (13).

8. Dispositif selon la revendication 7, comprenant un filtre à air (2) destiné à filtrer de l'air extérieur et/ou recirculé issu d'un pulseur (1), pour le délivrer au niveau d'un évaporateur (3), caractérisé en ce que la chambre d'admission (13) comprend des parois latérales (10) sensiblement perpendiculaires à la paroi arrière (9), l'une de ces parois comportant une entrée d'air (6) destinée à recevoir l'air issu de l'évaporateur (3), et en ce que le pulseur, le filtre et l'évaporateur sont installés sensiblement parallèlement aux parois latérales (10) de la chambre d'admission (13), la sortie de l'évaporateur étant sensiblement en regard de l'entrée (6) de cette chambre d'admission.

## Claims

1. Heating and/or air conditioning apparatus, especially for a motor vehicle, of the type comprising an admission chamber for cold or recirculated air (13) and a heating chamber (14) containing a heat exchanger (7) dividing it into a first compartment (14a) communicating with the admission chamber through a first outlet (15) of the latter, and a second compartment (14b), characterised in that the admission chamber (13) has a second outlet (18) which exhausts into an intermediate portion (19) of a first duct (16), access to which is controlled by a first flap valve (20), and which is adapted to supply air to at least a set of first distribution vents (17) disposed in the cabin (H) of the vehicle,
in that the first compartment (14a) includes, upstream of the heat exchanger (7), an outlet (23) which is in communication with a second duct (24), access to which is controlled by a second flap valve (22), and which is adapted to supply with air at least a plurality of second distribution vents (25) disposed in the cabin (H) of the vehicle, and
in that the second compartment (14b) has an aperture which is in communication, under the control of a third flap valve (29), with a terminal portion (21) of the first duct (16), in such a way that, according to the respective settings of the flap valves (20, 22, 29), the air issuing from the admission chamber (13) can flow, either from the first compartment (14a) to the first duct (16), so as to supply hot air to the first vents (17) after having passed through the heat exchanger (7) and through the third valve (29), or from the first duct (16) towards the second duct (24) so as to supply hot air to the second vents (25) after having passed through the first valve (20) and the third valve (29), and through the heat exchanger (7) and the second valve (22).

2. Apparatus according to Claim 1, characterised in that the second compartment (14b) has an outlet which is in communication with a third duct (27), access to which is controlled by the third valve (29), and which is arranged to supply with air at least a plurality of second distribution vents (25) disposed in the cabin (H) of the vehicle.

3. Apparatus according to Claim 2, characterised in that the first vents (17) are foot-warming vents, in that the second vents (25) are central and side ventilating vents, and in that the third vents (28) are deicing vents.

4. Apparatus according to Claim 3, characterised in that the foot-warming vents (17) are situated downstream of the first valve (20) and the third valve (29).

5. Apparatus according to Claim 3 or Claim 4, characterised in that it can operate in at least five distribution modes, selected from among the following:
- a first mode in which the first valve (20) denies access to the foot-warming vents (17), the third valve (29) denies access to the third duct (27) and the second valve (22) is at least partly open, which enables the side and central ventilating vents (25) to be supplied with a mixture of hot air and cold or recirculated air derived from the admission chamber (13),
- a second mode in which the first valve (20) denies access to the first duct (16) for air derived from the admission chamber (13), the second valve (22) is at least partly open, and the third valve (29) denies access to the third duct (27), which enables the foot-warming vents (17) to be supplied with hot air and the side and central ventilating vents (25) to be supplied with a mixture of air which has passed through the heat exchanger (7) and air derived from the admission chamber (13),
- a third mode in which the second valve (22) denies access to the second duct (24) for air derived from the admission chamber (13), the first valve (20) is at least partly open, and the third valve (29) denies access to the third duct (27), which enables the foot-warming vents (17) to be supplied with a mixture of hot air and cold air derived from the admission chamber,
- a fourth mode in which the first valve (20) and the second valve (22) respectively deny access to the first duct (16) and the second duct (24) for air derived from the admission chamber (13), and the third valve (29) denies access to the first duct (16), which enables the deicing vents (28) to be supplied with hot air, and
- a fifth mode in which the second valve (22) denies access to the second duct (24) for air derived from the admission chamber (13), and the first valve (20) and the third valve (29) give partial access to the first duct (16) and the third duct (27), which enables the foot-warming vents (17) to be supplied with a mixture of hot air and cold air derived from the admission chamber (13), and the deicing vents (28) to be supplied with hot air.

6. Apparatus according to one of Claims 1 to 5, characterised in that the admission chamber (13) and the heating chamber (14) are bounded, and the first duct (16) is at least partly bounded, by walls (8-12) of an air distribution casing (5).

7. Apparatus according to Claim 6, characterised in that the heating chamber (13) is disposed substantially above the distribution chamber (14), and in that the first duct is bounded by a rear wall (9) of the casing (5) and by a vertical intermediate wall (12) which defines the rear of the two chambers (13, 14) thereby superimposed, and which includes the second outlet (18) of the admission chamber (13).

8. Apparatus according to Claim 7, including an air filter (2) for filtering external and/or recirculated air derived from a blower (1) for delivery of the air to the region of an evaporator (3), characterised in that the admission chamber (13) has side walls (10) which are substantially at right angles to the rear wall (9), one of these walls having an air inlet (6) which is arranged to receive air from the evaporator (3), and in that the blower, the filter and the evaporator are installed substantially parallel to the side walls (10) of the admission chamber (13), the outlet of the evaporator being substantially in facing relationship with the inlet (6) of the said admission chamber.

## Patentansprüche

1. Heizungs- und/oder Klimaanlage, insbesondere für Kraftfahrzeuge, umfassend eine Kalt- oder Umlufteinlaßkammer (13) und eine Heizkammer (14), die einen Wärmetauscher (7) enthält, der sie in einen ersten Teilraum (14a), der mit der Einlaßkammer durch deren ersten Auslaß (15) in Verbindung steht, und einen zweiten Teilraum (14b) unterteilt, **dadurch gekennzeichnet,** daß die Einlaßkammer (13) einen zweiten Auslaß (18) umfaßt, der in einem Zwischenteil (19) eines ersten Kanals (16) mit durch eine erste Klappe (20) kontrolliertem Zugang mündet, der dazu bestimmt ist, wenigstens ersten im Fahrgastraum (H) des Fahrzeugs aufgenommenen Verteilungsdüsen (17) Luft zuzuführen,
daß der erste Teilraum (14a) vor dem Wärmetauscher (7) einen Auslaß (23) umfaßt, der mit einem zweiten Kanal (24) mit durch eine zweite Klappe (22) kontrolliertem Zugang in Verbindung steht, der dazu bestimmt ist, wenigstens zweiten im Fahrgastraum (H) des Fahrzeugs aufgenommenen Verteilungsdüsen (25) Luft zuzuführen, und
daß der zweite Teilraum (14b) eine Öffnung umfaßt, die, durch eine dritte Klappe (29) kontrolliert, mit einem Endteil (21) des ersten Kanals (16) in Verbindung steht, so daß in Abhängigkeit von den jeweiligen Positionierungen der Klappen (20, 22, 29) die aus der Einlaßkammer (13) kommende Luft entweder vom ersten Teilraum (14a) zum ersten Kanal (16) strömen kann, um den ersten Düsen (17) nach dem Durchströmen des Wärmetauschers (7) und dem Durchgang durch die dritte Klappe (29) Warmluft zuzuführen, oder vom ersten Kanal (16) zum zweiten Kanal (24), um den zweiten Düsen (25) nach dem Durchgang durch die erste (20) und die dritte (29) Klappe, nach dem Durchströmen des Wärmetauschers (7) und dem Durchgang durch die zweite Klappe (22) Warmluft zuzuführen.

2. Anlage nach Anspruch 1, **dadurch gekennzeichnet,** daß der zweite Teilraum (14b) einen Auslaß umfaßt, der mit einem dritten Kanal (27) in Verbindung steht, dessen Zugang durch die dritte Klappe (29) kontrolliert wird und der dazu bestimmt ist, wenigstens zweiten im Fahrgastraum (H) des Fahrzeugs aufgenommenen Verteilungsdüsen (25) Luft zuzuführen.

3. Anlage nach Anspruch 2, **dadurch gekennzeichnet,** daß die ersten Düsen (17) Fußraumbelüftungsdüsen sind, daß die zweiten Düsen (25) mittlere und seitliche Belüftungsdüsen sind und daß die dritten Düsen (28) Entfrostungsdüsen sind.

4. Anlage nach Anspruch 3, **dadurch gekennzeichnet,** daß die Fußraumbelüftungsdüsen (17) hinter der ersten (20) und der dritten (29) Klappe angeordnet sind.

5. Anlage nach einem der Ansprüche 3 und 4, **dadurch gekennzeichnet,** daß sie wenigstens fünf Verteilungsarten ermöglicht, die auszuwählen sind aus:
- einer ersten Verteilungsart, bei der die erste Klappe (20) den Zugang zu den Fußraumbelüftungsdüsen (17) verhindert, die dritte Klappe (29) den Zugang zum dritten Kanal (27) verhindert und die zweite Klappe (22) wenigstens teilweise geöffnet ist, so daß den seitlichen und mittleren Beluftungsdüsen (25) eine Mischung aus Warmluft und Kalt- oder Umluft, die aus der Einlaßkammer (13) kommt, zugeführt werden kann,
- einer zweiten Verteilungsart, bei der die erste Klappe (20) den Zugang der aus der Einlaßkammer (13) kommenden Luft zum ersten Kanal (16) verhindert, die zweite Klappe (22) wenigstens teilweise geöffnet ist und die dritte Klappe (29) den Zugang zum dritten Kanal (27) verhindert, so daß den Fußraumbelüftungsdüsen (17) Warmluft und den seitlichen und mittleren Belüftungsdüsen (25) eine Mischung aus Luft, die den Wärmetauscher (7) umströmt hat, und aus der Einlaßkammer (13) kommender Luft zugeführt werden kann,
- einer dritten Verteilungsart, bei der die zweite Klappe (22) den Zugang der aus der Einlaßkammer (13) kommenden Luft zum zweiten Kanal (24) verhindert, die erste Klappe (20) wenigstens teilweise geöffnet ist und die dritte Klappe (29) den Zugang zum dritten Kanal (27) verhindert, so daß den Fußraumbelüftungsdüsen (17) eine Mischung aus Warmluft und Kaltluft, die aus der Einlaßkammer kommt, zugeführt werden kann,
- einer vierten Verteilungsart, bei der die erste (20) und die zweite (22) Klappe den Zugang der aus der Einlaßkammer (13) kommenden Luft zum ersten (16) bzw. zweiten Kanal (24) verhindern und die dritte Klappe (29) den Zugang zum ersten Kanal (16) verhindert, so daß den Entfrostungsdüsen (28) Warmluft zugeführt werden kann, und
- einer fünften Verteilungsart, bei der die zweite Klappe (22) den Zugang der aus der Einlaßkammer (13) kommenden Luft zum zweiten Kanal (24) verhindert und die erste (20) und die dritte Klappe (29) partielle Zugänge zum ersten (16) und zum dritten (27) Kanal freigeben, so daß den Fußraumbelüftungsdüsen (17) eine Mischung aus Warm- und Kaltluft, die aus der Einlaßkammer (13) kommt, und den Entfrostungsdüsen (28) Warmluft zugeführt werden kann.

6. Anlage nach einem der Ansprüche 1 bis 5, **dadurch gekennzeichnet,** daß die Einlaß- (13) und Heizkammern (14) und wenigstens teilweise der erste Kanal (16) durch Wände (8-12) eines Luftverteilungsgehäuses (5) begrenzt sind.

7. Anlage nach Anspruch 6, **dadurch gekennzeichnet,** daß die Heizkammer (13) in etwa oberhalb der Verteilungskammer (14) angeordnet ist und daß der erste Kanal durch eine Rückwand (9) des Gehäuses (5) und eine vertikale Zwischenwand (12) begrenzt ist, die die Rückseite der beiden so übereinander angeordneten Kammern (13, 14) begrenzt und den zweiten Auslaß (18) der Einlaßkammer (13) enthält.

8. Anlage nach Anspruch 7, umfassend einen Luftfilter (2), der dazu bestimmt ist, Außen- und/oder Umluft, die von einem Luftgebläse (1) kommt, zu filtern, um sie an einen Verdampfer (3) abzugeben, **dadurch gekennzeichnet,** daß die Einlaßkammer (13) Seitenwände (10) umfaßt, die in etwa senkrecht zur Rückwand (9) angeordnet sind, wobei eine dieser Wände einen Lufteinlaß (6) umfaßt, der dazu bestimmt ist, die vom Verdampfer (3) kommende Luft zu erhalten, und daß das Luftgebläse, der Filter und der Verdampfer in etwa parallel zu den Seitenwänden (10) der Einlaßkammer (13) angebracht sind, wobei sich der Auslaß des Verdampfers in etwa gegenüber dem Einlaß (6) dieser Einlaßkammer befindet.
